# EUROPEAN PATENT SPECIFICATION

(11) **EP 3 521 641 B1**
(45) Date of publication and mention of the grant of the patent: **26.08.2020**
(21) Application number: 18155099.7
(22) Date of filing: 05.02.2018
(51) Int. Cl.: F16B 5/00, B60R 13/02, F16B 21/07

(54) **VEHICLE HEADLINER ATTACHMENT**
FAHRZEUGDACHHIMMELBEFESTIGUNG
MOYENS DE FIXATION POUR GARNITURE DE PAVILLON POUR VÉHICULES

(43) Date of publication of application: 07.08.2019
(73) Proprietor: Ford Global Technologies, LLC, Dearborn, MI 48126 (US)
(72) Inventor: AYATA, Adnan, 41900 Derince/KOCAELI (TR); ALDIG, Gökhan, 54580 ARiFiYE/SAKARYA (TR)
(74) Representative: Illing, Rolf

(56) References cited:
- WO-A1-00/20255
- WO-A2-2009/064711
- DE-A1- 10 335 220
- DE-A1-102008 052 965
- DE-A1-102010 033 849
- DE-A1-102012 017 096
- JP-A- H04 208 656
- US-A- 5 876 084
- US-A1- 2006 168 773
- US-B2- 8 899 671

## Description

The present invention relates in general to a vehicle headliner attachment. The present invention relates more in particular to a mounting bracket that can be used in a vehicle headliner attachment. Specifically, the present invention provides a vehicle headliner assembly, and a mounting bracket that can be used in such a headliner assembly, and a vehicle comprising such a headliner assembly.

Vehicles (e.g. a car or a truck or a boat) with a roof structure typically have a headliner assembly to provide an attractive appearance for the interior of the vehicle. Different manners of attachment are used in the art. Some manners are more difficult than others during manufacturing or repair.

DE 103 35 220 A1 discloses a vehicle headliner assembly according to the preamble of claim 1.

JPH-04 278855 A relates to a roof lining for a vehicle made of a synthetic resin, and more particularly to a method for attaching a bracket for attachment to a vehicle body side to a roof lining for a vehicle.

US 3,889,320 A describes a one-piece headliner and moulding retainer for securing a headliner assembly adjacent the roof of an automobile. The roof structure is provided with an oval aperture. The retainer has an arrowhead-shaped mounting portion to be inserted in said aperture.

CN 204567500 U discloses a connecting device for a roof lining and a skylight, which comprises a fixing frame, arranged on the back surface of the car roof and a card slot opened on the automobile sunroof, the fixed frame and the card slot are connected with each other, using one or more rails.

US 2004/0256889 A1 discloses a method of manufacturing a vehicle body part that embeds an insert piece into a foamed layer of the body part by holding the insert piece in a foaming tool using a magnetic force.

US 5,186,517 A describes a fastening arrangement for attaching components such as headliners, overhead consoles, or the like to vehicles.

US 8,899,671 B2 describes a vehicle headliner attachment system including a moonroof assembly having a peripheral structure surrounding at least one glass panel.

KR 100692748 B1 describes a fixing device for self-supporting headliners.

There is always room for improvements and alternatives.

The present invention has the object to provide a vehicle headliner assembly, and a mounting bracket for use in such headliner assembly, and a vehicle comprising such a headliner assembly.

It is a particular object of embodiments of the present invention to provide a headliner assembly that is easier to install.

It is a particular object of embodiments of the present invention to provide a headliner assembly not requiring a clip during installation.

It is a particular object of embodiments of the present invention to provide a headliner assembly not requiring a locator during installation.

It is a particular object of embodiments of the present invention to provide a headliner assembly that is serviceable.

It is a particular object of embodiments of the present invention to provide a headliner assembly that is easier to dismount.

These objects are achieved by a vehicle headliner assembly having the features of claim 1, and by a vehicle having the features of claim 8. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

The present invention discloses a vehicle headliner assembly comprising a plurality of mounting brackets, each mounting bracket having a three-dimensional shape comprising a base plate and a protruding portion comprising a plurality of wall sections, wherein the mounting bracket has an omega-shaped cross-section; and the plurality of wall sections comprises a first pair of wall sections facing away from the base plate and defining an angle in the range from 30° to 50° for pushing apart two flexible members of a connector attached to a headliner when said headliner is being pushed towards the base plate; and the plurality of wall sections comprises a second pair of wall sections defining an angle in the range from 80° to 100° for holding the headliner by retaining said flexible members of said connector in a releasable manner.

It is an advantage of the angle defined by the first pair of wall sections that they allow easy mounting of the headliner during production, by simply pushing the headliner towards the mounting brackets attached to the roof or roof structure.

It is a further advantage of the angle defined by the second pair of wall sections that they allow relatively easy removal of the headliner, by a simple retraction force, for example for repairing the headliner, without damaging the flexible members of the connector of the headliner.

If is a further advantage that the angle defined by the second pair is considerably larger (e.g. at least 30° larger) than the angle defined by the first pair, such that a pulling force required to dismount the headliner needs to be significantly larger than the force required to mount the headliner. In this way, the risk of inadvertent disengagement is strongly reduced.

According to the present invention, the vehicle headliner assembly further comprises said headliner and a plurality of connectors connected thereto, for engaging with said plurality of brackets.

According to the present invention, the flexible members of the connectors comprise a first pair of wall sections for abutting the first pair of wall sections of the mounting bracket; and the flexible members of the connectors comprise a second pair of wall sections for abutting the second pair of wall sections of the mounting bracket; and the wall sections of the first pair and the wall sections of the second pair form two V-shapes for clamping the mounting bracket between them.

It is an advantage of the angular positions of the wall sections of the flexible members that they induce a clamping force that urges the headliner in its default distance relative to the mounting bracket, without requiring an additional resilient element. In this way, component cost can be reduced and vibrational noise can be reduced.

According to a further advantageous embodiment of the present invention, the second pair of wall sections of the bracket is connected to the base plate via two further wall sections each oriented substantially perpendicular to the base plate of the mounting bracket; and wherein these two further wall sections are interconnected via an interconnection wall also oriented substantially perpendicular to the base plate so as to define a U-shaped cross section in a plane parallel to the base plate.

It is an advantage that the second pair of wall sections is mounted to the base plate via three further wall sections forming a U-shaped cross section in a plane parallel to the base plate, rather than via only two separate wall sections, because the U-shape improves the rigidity of the structure, in particular against a force in a direction parallel to the base plate. The interconnection wall not only prevents the omega-shape from widening, but also offers resistance to bending of the protruding portion due to a shear force exerted upon the headliner.

It is a further advantage that the second pair of wall sections is mounted to the base plate via three further wall sections forming a U-shaped cross section, rather than via four wall sections forming a tube with a rectangular cross section, because the U-shape still allows some flexibility of the 3D-structure, which is advantageous for example to absorb vibrations, and/or when dismounting the headliner.

According to a further advantageous embodiment of the present invention, the flexible members of the connector comprise a third pair of wall sections each being substantially parallel to a respective wall section of the first pair of wall sections of the connector.

It is an advantage of this third pair of wall sections that they allow easy sliding and urge opening of the flexible members when the headliner is being mounted to the bracket.

According to an alternative advantageous embodiment of the present invention, the flexible members of the connectors comprise a third pair of curved wall sections located at a distal end of the flexible members.

It is an advantage of a curved wall section, more in particular convexly curved, that a friction force exerted between the contacting surfaces of the bracket and of the connector due to sliding during mounting of the headliner can be reduced by minimizing the contact area between these surfaces.

According to a further advantageous embodiment of the present invention, a virtual tangential plane contacting a side or end face of the walls of the first pair of the bracket and simultaneously contacting a side or end face of the walls of the second pair of the bracket defines an angle in the range from 3° to 8° with respect to a plane perpendicular to the base plate of the bracket.

It is an advantage that the three-dimensional shape is tapered, because this allows to easier position a connector with a rectangular opening over the mounting bracket. According to a further advantageous embodiment of the present invention, the bracket is manufactured as an integral piece of material.

It is an advantage that such a bracket is easy to manufacture, and is stronger and the risk of parts braking of is reduced.

According to a further advantageous embodiment of the present invention, the base plate has a plurality of openings.

It is an advantage of these openings, that they allow easy attachment of the bracket to a roof or roof assembly.

According to another advantageous embodiment of the present invention, the present invention discloses a vehicle comprising a vehicle headliner assembly described above.

Further features and advantages of the present invention will become apparent from the following description of a non-limiting embodiment of the invention which will be explained below with reference to the drawings, wherein:
- FIG. 1: shows a roof structure comprising a plurality of mounting brackets (only two of which are visible in FIG. 1) according to the present invention, for mounting a headliner.
- FIG. 2: shows a perspective view of a mounting bracket according to the present invention.
- FIG. 3: shows another perspective view of the mounting bracket of FIG. 2.
- FIG. 4: shows a side view of the mounting bracket of FIG. 2, having a plurality of wall sections.
- FIG. 5: is the same view as FIG. 4, showing angular distances between a first and second pair of wall sections.
- FIG. 6: shows another side view of the mounting bracket of FIG. 2.
- FIG. 7: shows a top view of the mounting bracket of FIG. 2.
- FIG. 8: shows an exemplary headliner assembly comprising the mounting bracket of FIG. 2.

In the various figures, equivalent elements with respect to their function are always provided with the same reference numerals so that these elements are usually described only once.

The present invention is related to a vehicle headliner attachment. The present invention relates more in particular to a mounting bracket that can be used in a vehicle headliner attachment system.

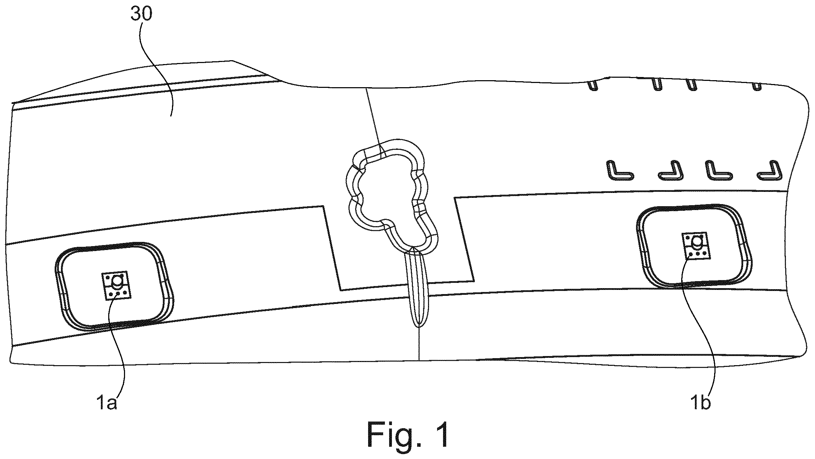

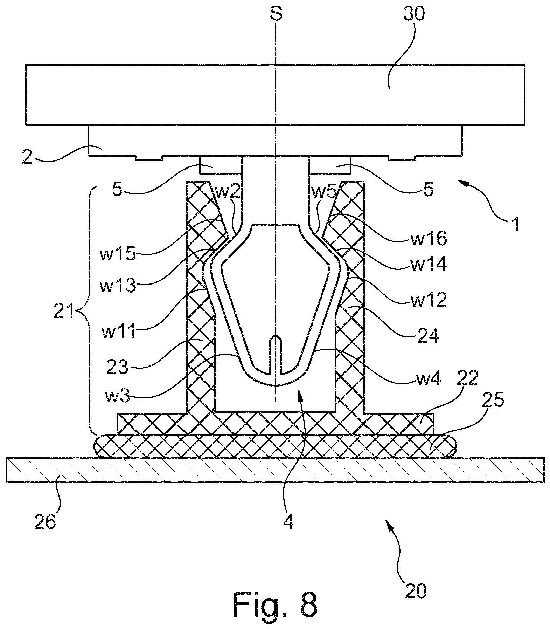

FIG. 1 shows a roof structure 30 comprising a plurality of mounting brackets 1 for mounting a headliner 26 (see FIG. 8), but only two mounting brackets 1a, 1b are visible in FIG. 1. In practice, typically a plurality of at least eight, for example ten or twelve of such mounting brackets 1 are attached to the roof or roof structure 30. The brackets 1 are typically arranged on the periphery of a rectangular region, for example four or five on each longitudinal side and two or three on each lateral side of the rectangle.

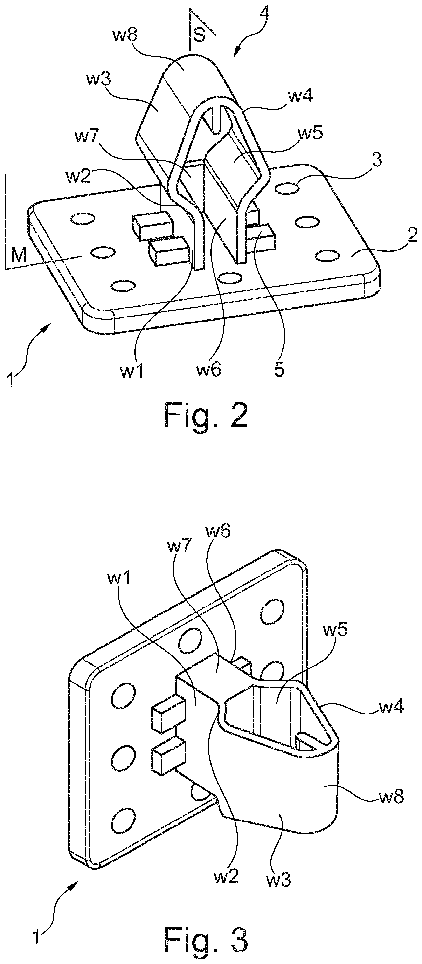

FIG. 2 shows a perspective view of a mounting bracket 1 according to the present invention.

The mounting bracket 1 has a three-dimensional shape comprising a base plate 2, and a protruding portion 4 extending from the base plate 2.

Two virtual planes are indicated in the drawing, a plane M oriented perpendicular to the base plate 2 and running through the middle of the lateral side of the bracket 1, and a plane S oriented perpendicular to the base plate 2 and running through the middle of the longitudinal side of the mounting bracket 1. The plane S is a plane of symmetry. The plane M is not a plane of symmetry because of the presence of the wall section w7, as will be explained further below.

A cross section of the mounting bracket 1 in the plane M defines an omega-like shape, formed by the plurality of wall sections w1-w2-w3-w8-w4-w5-w6. The wall section w7 does not participate in the formation of the omega-like shape.

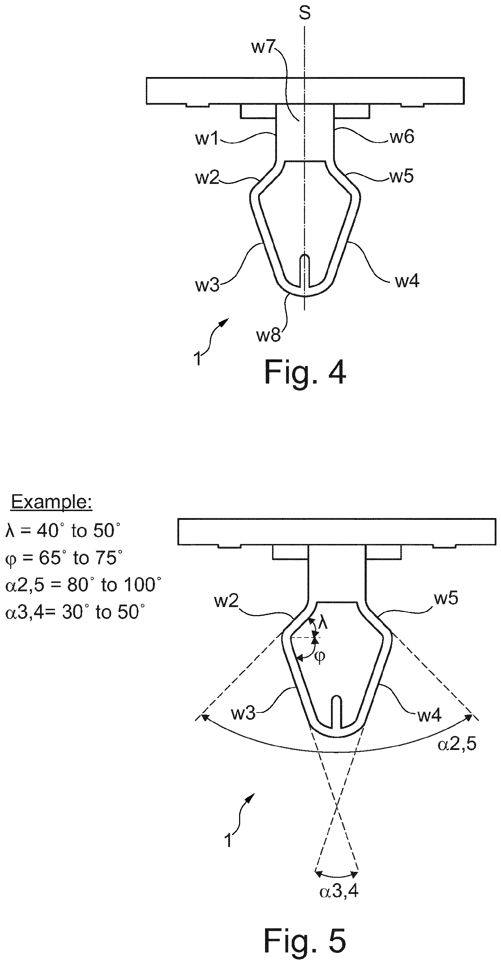

The plurality of wall sections comprises a first pair of wall sections w3, w4 facing away (upwards in FIG. 2) from the base plate 2, and defining an angle α3,4 (better shown in FIG. 5) in the range from 30° to 50°, preferably in the range from 35° to 45°, for example equal to about 40° for pushing apart two flexible members 23, 24 (see FIG. 8) of a connector 21 attached to a headliner 26 when said headliner 26 and thus also the connector 21 is being pushed towards the base plate 2 of the bracket 1 attached to the roof structure. The wall sections w3, w4 are located on opposite sides of the symmetry plane S.

The plurality of wall sections further comprises a second pair of wall sections w2, w5 defining an angle α2,5 in the range from 80° to 100° (see FIG. 5), preferably in the range from 85° to 95°, for example equal to about 90° for retaining said flexible members 23, 24 of said connector 21 after mounting the headliner 26 to the roof structure, thus after engagement of the brackets 1 and the connectors 21. Using an angle in the range from 80° to 100° rather than an almost straight angle of 180° (as is the case in US 8,899,671 B2) offers the major advantage that the headliner can be easily released from the roof structure, should that be necessary, for example during car manufacturing or during repair afterwards.

As shown in FIG. 2, the wall sections w3 and w4 are preferably interconnected via a convexly curved wall section w8, in order to reduce stress concentrations. The same applies for the interconnection between the wall sections w2 and w3, and between the wall sections w4 and w5.

As can be seen, the second pair of wall sections w2, w5 is not mounted directly to the base plate 2, but indirectly via two further wall sections w1, w6 each oriented substantially perpendicular to the base plate 2 of the mounting bracket 1. In particular, the wall section w2 is adjacent wall section w1, and the wall section w5 is adjacent wall section w6. This allows to create some spacing between the base plate 2 and the second pair of wall sections w2, w5 for reasons that will be described further below. The wall sections w1, w6 are preferably parallel to the symmetry plane S, hence perpendicular to the base plate 2.

Preferably, the further wall sections w1 and w6 are interconnected via an interconnection wall section w7 which is oriented substantially perpendicular to the base plate 2, parallel to the plane M. The wall sections w1 and w7 and w6 form a U-shaped cross-section in a plane parallel to the base plate 2. This provides extra rigidity to the protruding portion 4.

Preferably the mounting bracket 1 is manufactured as an integral piece of material, for example metal or a plastic material, preferably a thermoset plastic material.

Preferably the base plate 2 has a plurality of openings 3 for mounting the bracket 1 to a roof or roof structure 30. In the example shown, the mounting bracket has eight openings, but that is not absolutely required, and fewer openings, for example four openings, one near each corner of the base plate 2, may also be sufficient. The mounting bracket 1 can be attached to the roof in any known manner, for example using rivets or screws, or in case of metal, by spot welding, or using glue or an adhesive, or in any other way. When using glue or an adhesive, the openings 3 can be omitted.

The mounting bracket 2 may optionally further comprise a plurality of spacer blocks 5, for coming into contact with a distal end of the flexible members 23, 24 of the connector 21 when the latter is being pushed towards the base plate 2 during mounting of the headliner 26. The height of these spacer blocks 5 in a direction perpendicular to the base plate 2 is preferably in the range from 4 to 8 mm, for example equal to about 6 mm, which is typically higher than the height of the heads of the screws or rivets or spot welds (not shown).

FIG. 3 shows another perspective view of the mounting bracket of FIG. 2.

FIG. 4 shows a side view of the mounting bracket of FIG. 2, clearly showing the symmetry.

FIG. 5 shows the same view on the bracket 1 as FIG. 4, but indicates the angular distance α3,4 between the wall sections w3 and w4 of the first pair of wall sections, and indicates the angular distance α2,5 between the wall sections w2 and w5 of the second pair of wall sections. As can be seen, the angular distance α3,4 of the first pair of wall sections is rather sharp for allowing easy engagement of the bracket and the connector, and the angular distance α2,5 of the second pair of wall sections is 30° to 50° larger for retaining the bracket and the connector, while still allowing relatively easy disengagement of the bracket and the connector.

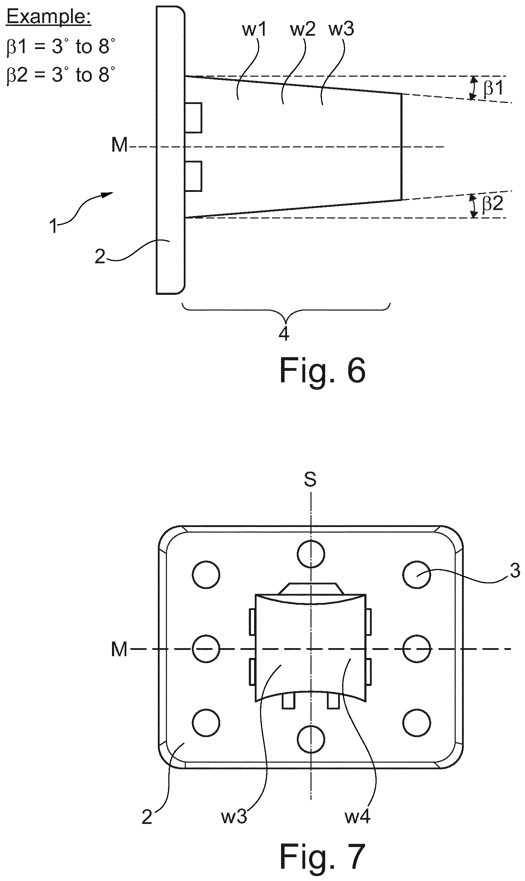

FIG. 6 shows another side view of the mounting bracket of FIG. 2, showing another optional feature, namely that the protruding portion 4 of the mounting bracket 1 is tapered. As shown, a virtual tangential plane contacting an (upper) side of the wall sections w1, w2, w3, w4, w5, w6 defines an angle β1 in the range from 3° to 8° with respect to a plane parallel to the plane M, and a virtual tangential plane contacting a (lower) side of the wall sections w1, w2, w3, w4, w5, w6 defines an angle β2 in the range from 3° to 8° with respect to a plane parallel to the plane M. This may allow for easier and faster positioning of a connector over the mounting bracket 1. The angle β1 and β2 may be the same angle or a different angle.

FIG. 7 shows a top view of the mounting bracket of FIG. 2.

FIG. 8 shows a portion of an exemplary headliner assembly 20 comprising the mounting bracket of FIG. 2.

In the drawing of FIG. 8, a vehicle headliner assembly 20 is shown in engagement with a roof or roof assembly 30 using an attachment system comprising brackets 1 and mating connectors 21. The exemplary connector 21 is connected to the headliner 26 in known manners, for example using an adhesive.

The connector 21 comprises a base 22 and two flexible members 23, 24 oriented perpendicular to the base 22. The connector 21 comprises a first pair of wall sections w11, w12 located on the first and second flexible member 23, 24, respectively, for abutting the walls w3, w4 of the first pair of wall sections of the mounting bracket 1. The connector 21 also comprises a second pair of wall sections w13, w14 located on the first and second flexible member 23, 24, respectively, for abutting the walls w2, w5 of the second pair of wall sections of the mounting bracket 1.

In FIG. 8 the flexible members 23, 24 of the connector 21 are deliberately shown at a distance from the mounting bracket 1 for illustrative purposes, but in practice the flexible members clamp the mounting bracket 1.

As shown, the wall section w11 and w13 are preferably interconnected via a curved transition, in order to reduce stress concentrations, for reducing the risk of braking the flexible members during mounting.

As shown, the wall sections w11 and w13 on the first flexible member 23, and the wall sections w12 and w14 on the second flexible member 24 form two V-shapes for clamping the mounting bracket 1 between them in a resilient manner without requiring an additional resilient element for pushing the connector toward or away from the bracket 1. The V-shapes allow some movement, for example during vibrations, thereby reducing vibrational noise. The V-shapes also allow some tolerance of the dimensions of the bracket 1 and the connector 21.

As can be understood from FIG. 8, preferably a length of the flexible members 23, 24 is chosen slightly smaller than the intended distance between the base plate 22 of the connector 21 and the base plate 2 of the mounting bracket 1.

Preferably the first flexible member 23 has an additional wall section w15 substantially parallel to the wall section w11, and the second flexible member 24 has an additional wall section w16 substantially parallel to the wall section w12. During mounting of the headliner 26, the wall section w15 comes into contact with the wall section w3 and slides over w3, and the wall section w16 comes into contact with wall section w4 and slides over w4, while the flexible members 23, 24 are being pushed apart.

Alternatively, rather than straight, the wall sections w15 and w16 may also be slightly curved (not shown), for minimizing the contact area with w3 and w4 when sliding, thereby reducing the friction force, and thus reducing the required force for mounting the headliner.

The skilled person can appreciate from FIG. 8 that the headliner 26 can be mounted to the roof assembly 30 by merely pushing the headliner 26 towards the roof 30, thereby engaging the connector 21 and the bracket 1.

The skilled person will also appreciate that the headliner 26 can be dismounted by pulling the headliner 26 away from the roof or roof assembly 30. No further operations are required, such as having to unscrew a plurality of screws, or having to push lips together before pulling. It is pointed out that no access to the connector 21 or to the bracket 1 is required.

Although the connector 21 shown in FIG. 8 is very well suited for interconnection with the mounting bracket 1 described above, it is pointed out that embodiments of the present invention are not limited to this specific connector 21.

### REFERENCE NUMERALS

1, 1a, 1b: mounting bracket,
2: base plate,
3: opening,
4: protruding portion,
5: spacers,
w1-w8: wall sections of the mounting bracket,
S: symmetry plane,
M: plane perpendicular to the symmetry plane,
20: vehicle headliner assembly,
21: connector,
22: base of the connector,
23, 24: flexible members of the connector,
25: adhesive of tape or the like,
26: headliner,
w11-w16: wall sections of the connector,
30: roof or roof structure.

## Claims

1. A vehicle headliner assembly (20) comprising a plurality of mounting brackets (1), each mounting bracket (1) having a three-dimensional shape comprising a base plate (2) and a protruding portion (4) comprising a plurality of wall sections, and further comprising a headliner (26), wherein
- the mounting bracket has an omega-shaped cross-section;
- the plurality of wall sections comprises a first pair of wall sections (w3, w4) facing away from the base plate (2); and
- the plurality of wall sections comprises a second pair of wall sections (w2, w5),
wherein the vehicle headliner assembly (20) further comprises
- a plurality of connectors (21) connected to the headliner (26) for engaging with said plurality of brackets (1), wherein said connector (21) comprises two flexible members (23, 24);
**characterized by**
- the first pair of wall sections (w3, w4) defining between said first pair of wall sections an angle (α3,4) in the range from 30° to 50° for pushing apart said two flexible members (23, 24) of said connector (21) when said headliner (26) is being pushed towards the base plate (2); and
- the second pair of wall sections (w2, w5) defining between said second pair of wall sections an angle (α2,5) in the range from 80° to 100° for holding the headliner (26) by retaining said flexible members (23, 24) of said connector (21) in a releasable manner,
wherein
- the flexible members (23, 24) of the connectors (21) comprise a first pair of wall sections (w11, w12) for abutting the first pair of wall sections (w3, w4) of the mounting bracket (1);
- the flexible members (23, 24) of the connectors (21) comprise a second pair of wall sections (w13, w14) for abutting the second pair of wall sections (w2, w5) of the mounting bracket (1); and
- the wall sections (w11, w12) of the first pair and the wall sections (w13, w14) of the second pair form two V-shapes for clamping the mounting bracket between them.

2. A vehicle headliner assembly (20) according to claim 1,
**characterized in, that**
the second pair of wall sections (w2, w5) of the bracket (1) is connected to the base plate (2) via two further wall sections (w1, w6) each oriented substantially perpendicular to the base plate (2) of the mounting bracket (1);
wherein these two further wall sections (w1, w6) are interconnected via an interconnection wall (w7) also oriented substantially perpendicular to the base plate so as to define a U-shaped cross section in a plane parallel to the base plate (2).

3. A vehicle headliner assembly (20) according to any of the previous claims,
**characterized in, that**
the flexible members (23, 24) of the connectors (21) comprise a third pair of wall sections (w15, w16) each being substantially parallel to a respective wall section of the first pair of wall sections (w11, w12).

4. A vehicle headliner assembly (20) according to any of the claims 1 to 2,
**characterized in, that**
the flexible members (23, 24) of the connectors (21) comprise a third pair of curved wall sections (w15, w16), located at a distal end of the flexible members (23, 24).

5. A vehicle headliner assembly (20) according to any of the previous claims,
**characterized by**
a virtual tangential plane contacting a side of the walls of the first pair (w3, w4) of the bracket (1) and simultaneously contacting a side of the walls of the second pair (w2, w5) of the bracket (1) defines an angle (β1) in the range from 3° to 8° with respect to a plane perpendicular to the base plate (2) of the bracket (1).

6. A vehicle headliner assembly (20) according to any of the previous claims,
**characterized in, that**
the bracket (1) is manufactured as an integral piece of material.

7. A vehicle headliner assembly (20) according to any of the previous claims,
**characterized in, that**
the base plate (2) has a plurality of openings (3).

8. A vehicle comprising a vehicle headliner assembly (20) according to any of the claims 1 to 7.

## Patentansprüche

1. Fahrzeugdachhimmelanordnung (20), umfassend mehrere Montagehalterungen (1), wobei jede Montagehalterung (1) eine dreidimensionale Form aufweist, die eine Grundplatte (2) und einen vorstehenden Teil (4) mit mehreren Wandabschnitten umfasst, und ferner umfassend einen Dachhimmel (26), wobei
- die Montagehalterung einen omegaförmigen Querschnitt aufweist;
- die mehreren Wandabschnitte ein erstes Paar Wandabschnitte (w3, w4) umfassen, die von der Grundplatte (2) abgewandt sind; und
- die mehreren Wandabschnitte ein zweites Paar Wandabschnitte (w2, w5) umfassen,
wobei die Fahrzeugdachhimmelanordnung (20) ferner Folgendes umfasst:
- mehrere Verbinder (21), die mit dem Dachhimmel (26) verbunden sind, um mit den mehreren Halterungen (1) in Eingriff zu stehen, wobei der Verbinder (21) zwei flexible Elemente (23, 24) umfasst;
**gekennzeichnet durch**
- das erste Paar Wandabschnitte (w3, w4), das zwischen dem ersten Paar Wandabschnitte einen Winkel (α3,4) im Bereich von 30 ° bis 50 ° definiert, um die beiden flexiblen Elemente (23, 24) des Verbinders (21) auseinanderzuschieben, wenn der Dachhimmel (26) in Richtung der Grundplatte (2) geschoben wird; und
- das zweite Paar Wandabschnitte (w2, w5), das zwischen dem zweiten Paar Wandabschnitte einen Winkel (α2,5) im Bereich von 80 ° bis 100 ° definiert, um den Dachhimmel (26) zu halten, indem die flexiblen Elemente (23, 24) des Verbinder (21) in einer lösbaren Weise gehalten werden,
wobei
- die flexiblen Elemente (23, 24) der Verbinder (21) ein erstes Paar Wandabschnitte (w11, w12) zum Anliegen an das erste Paar Wandabschnitte (w3, w4) der Montagehalterung (1) umfassen;
- die flexiblen Elemente (23, 24) der Verbinder (21) ein zweites Paar Wandabschnitte (w13, w14) zum Anliegen an das zweite Paar Wandabschnitte (w2, w5) der Montagehalterung (1) umfassen und
- die Wandabschnitte (w11, w12) des ersten Paars und die Wandabschnitte (w13, w14) des zweiten Paars zwei V-Formen ausbilden, um die Montagehalterung zwischen sich einzuklemmen.

2. Fahrzeugdachhimmelanordnung (20) nach Anspruch 1,
**dadurch gekennzeichnet, dass**
das zweite Paar Wandabschnitte (w2, w5) der Halterung (1) mit der Grundplatte (2) über zwei weitere Wandabschnitte (w1, w6) verbunden ist, die jeweils im Wesentlichen senkrecht zur Grundplatte (2) der Montagehalterung (1) ausgerichtet sind;
wobei diese beiden weiteren Wandabschnitte (w1, w6) miteinander über eine Verbindungswand (w7) verbunden sind, die ebenfalls im Wesentlichen senkrecht zur Grundplatte ausgerichtet ist, um in einer zur Grundplatte (2) parallelen Richtung einen U-förmigen Querschnitt zu definieren.

3. Fahrzeugdachhimmelanordnung (20) nach einem der vorangehenden Ansprüche,
**dadurch gekennzeichnet, dass**
die flexiblen Elemente (23, 24) der Verbinder (21) ein drittes Paar Wandabschnitte (w15, w16) umfassen, die jeweils im Wesentlichen parallel zu einem jeweiligen Wandabschnitt des ersten Paars Wandabschnitte (w11, w12) sind.

4. Fahrzeugdachhimmelanordnung (20) nach einem der Ansprüche 1 bis 2,
**dadurch gekennzeichnet, dass**
die flexiblen Elemente (23, 24) der Verbinder (21) ein drittes Paar gekrümmter Wandabschnitte (w15, w16) umfassen, die sich an einem distalen Ende der flexiblen Elemente (23, 24) befinden.

5. Fahrzeugdachhimmelanordnung (20) nach einem der vorangehenden Ansprüche,
**gekennzeichnet durch**
eine virtuelle Tangentialebene, die mit einer Seite der Wände des ersten Paars (w3, w4) der Halterung (1) in Kontakt steht und gleichzeitig mit einer Seite der Wände des zweiten Paars (w2, w5) der Halterung (1) in Kontakt steht und in Bezug auf eine zur Grundplatte (2) der Halterung (1) senkrechte Ebene einen Winkel (β1) im Bereich von 3 ° bis 8 ° definiert.

6. Fahrzeugdachhimmelanordnung (20) nach einem der vorangehenden Ansprüche,
**dadurch gekennzeichnet, dass**
die Halterung (1) aus einem einzigen Materialstück hergestellt ist.

7. Fahrzeugdachhimmelanordnung (20) nach einem der vorangehenden Ansprüche,
**dadurch gekennzeichnet, dass**
die Grundplatte (2) mehrere Öffnungen (3) aufweist.

8. Fahrzeug, umfassend eine Fahrzeugdachhimmelanordnung (20) nach einem der Ansprüche 1 bis 7.

## Revendications

1. Ensemble garniture de pavillon de véhicule (20) comprenant une pluralité de supports de montage (1), chaque support de montage (1) ayant une forme tridimensionnelle comprenant une plaque de base (2) et une partie saillante (4) comprenant une pluralité de sections de paroi, et comprenant en outre une garniture de pavillon (26),
le support de montage ayant une section transversale en forme d'oméga ;
la pluralité de sections de paroi comprenant une première paire de sections de paroi (w3, w4) orientées à l'opposé de la plaque de base (2) ; et
la pluralité de sections de paroi comprenant une deuxième paire de sections de paroi (w2, w5),
l'ensemble garniture de pavillon de véhicule (20) comprenant en outre une pluralité de raccords (21) reliés à la garniture de pavillon (26) pour venir en prise avec ladite pluralité de supports (1), ledit raccord (21) comprenant deux éléments flexibles (23, 24) ;
**caractérisé par**
la première paire de sections de paroi (w3, w4) définissant entre ladite première paire de sections de paroi un angle (α3,4) dans la plage comprise entre 30° et 50° pour écarter lesdits deux éléments flexibles (23, 24) dudit raccord (21) lorsque ladite garniture de pavillon (26) est poussée vers la plaque de base (2) ; et
la deuxième paire de sections de paroi (w2, w5) définissant entre ladite deuxième paire de sections de paroi un angle (α2,5) dans la plage comprise entre 80° et 100° pour maintenir la garniture de pavillon (26) en retenant lesdits éléments flexibles (23, 24) dudit raccord (21) de manière détachable,
les éléments flexibles (23, 24) des raccords (21) comprenant une première paire de sections de paroi (w11, w12) pour venir en butée contre la première paire de sections de paroi (w3, w4) du support de montage (1) ;
les éléments flexibles (23, 24) des raccords (21) comprenant une deuxième paire de sections de paroi (w13, w14) pour venir en butée contre la deuxième paire de sections de paroi (w2, w5) du support de montage (1) ; et
les sections de paroi (w11, w12) de la première paire et les sections de paroi (w13, w14) de la deuxième paire formant deux formes en V pour serrer le support de montage entre elles.

2. Ensemble garniture de pavillon de véhicule (20) selon la revendication 1,
**caractérisé en ce que**
la deuxième paire de sections de paroi (w2, w5) du support (1) est reliée à la plaque de base (2) par l'intermédiaire de deux autres sections de paroi (w1, w6), chacune étant orientée sensiblement perpendiculairement à la plaque de base (2) du support de montage (1) ; ces deux autres sections de paroi (w1, w6) étant interconnectées par l'intermédiaire d'une paroi d'interconnexion (w7) également orientée sensiblement perpendiculairement à la plaque de base de sorte à définir une section transversale en forme de U dans un plan parallèle à la plaque de base (2).

3. Ensemble garniture de pavillon de véhicule (20) selon l'une quelconque des revendications précédentes,
**caractérisé en ce que**
les éléments flexibles (23, 24) des raccords (21) comprennent une troisième paire de sections de paroi (w15, w16), chacune étant sensiblement parallèle à une section de paroi respective de la première paire de sections de paroi (w11, w12).

4. Ensemble garniture de pavillon de véhicule (20) selon la revendication 1 ou 2,
**caractérisé en ce que**
les éléments flexibles (23, 24) des raccords (21) comprennent une troisième paire de sections de parois courbes (w15, w16), situées à une extrémité distale des éléments flexibles (23, 24).

5. Ensemble garniture de pavillon de véhicule (20) selon l'une quelconque des revendications précédentes,
**caractérisé par**
un plan tangentiel virtuel en contact avec un côté des parois de la première paire (w3, w4) du support (1) et simultanément en contact avec un côté des parois de la deuxième paire (w2, w5) du support (1) définissant un angle (β1) dans la plage comprise entre 3° et 8° par rapport à un plan perpendiculaire à la plaque de base (2) du support (1).

6. Ensemble garniture de pavillon de véhicule (20) selon l'une quelconque des revendications précédentes,
**caractérisé en ce que**
le support (1) est fabriqué comme une pièce de matériau d'un seul tenant.

7. Ensemble garniture de pavillon de véhicule (20) selon l'une quelconque des revendications précédentes,
**caractérisé en ce que**
la plaque de base (2) a une pluralité d'ouvertures (3).

8. Véhicule comprenant un ensemble garniture de pavillon de véhicule (20) selon l'une quelconque des revendications 1 à 7.
